**Europäisches Patentamt**

(19) **European Patent Office**

**Office européen des brevets**

(11) Publication number: **0 127 956**

**A1**

(12) **EUROPEAN PATENT APPLICATION**

(21) Application number: **84303074.3**

(22) Date of filing: **08.05.84**

(51) Int. Cl.³: **C 03 B 37/025**
**C 03 B 19/00, C 03 B 19/06**
**C 03 B 19/10**

(30) Priority: **10.05.83 US 493424**

(43) Date of publication of application:
**12.12.84 Bulletin 84/50**

(84) Designated Contracting States:
**DE FR GB**

(71) Applicant: **Aetna Telecommunications Laboratories**
**131 Flanders Road**
**Westboro Massachusetts 01581(US)**

(72) Inventor: **Nath, Dilip K.**
**4 Cavatorta Drive**
**Framingham Massachusetts 01701(US)**

(74) Representative: **Arthur, Bryan Edward et al,**
**Withers & Rogers 4 Dyer's Buildings Holborn**
**London EC1N 2JT(GB)**

(54) Method for manufacturing sinterable glass bodies.

(57) An apparatus and method for forming and collecting glass powders and for producing therefrom transparent, highly pure glass bodies of any shape. Glass oxide precursors are introduced into a torch to produce glass powders. These are collected and shaped into any desirable form by a die or mold. The shaped powders are sintered in successive heating steps at temperatures lower than the melting or decomposition temperature of the glass body to produce first a rigid opaque body and then a rigid transparent glass of the desired form. The powders are of submicron size and are extremely reactive and pure, and are produced by supplying glass oxide precursors to a torch, such as an oxyhydrogen, oxyhydrocarbon or plasma torch. The powders are shaped into any complicated form through the use of a non-reactive mold. The compact powdered body thus formed is rigidized by sintering within the mold at a first temperature. The rigid, opaque glass body resulting from the initial sintering is subjected to a final sintering at a temperature above the first temperature and below the melting point of the glass to form a fully transparent glass structure. This glass structure is a pure or doped silica body applicable for use as a high-temperature lamp envelope, container for growing silicon crystals, preform for making optical wave guides, couplers, prisms, lenses, filters, or other high-quality optical products of any shape.

FIG. 1

- 1 -

## FIELD OF THE INVENTION

This invention relates to apparatus and processes for producing highly pure glass powders and glass bodies from the powders.

## BACKGROUND OF THE INVENTION

Transparent glass bodies are normally required as starting members in the fabrication of many optical elements such as optical fibers, lenses, prisms, filters, or lamp envelopes.

Processes for sintering powders to form transparent glass bodies are well known in the art. In one example shown in U.S. Patent 3,806,370, glass powders are deposited by flame hydrolysis on the surface of a substrate comprising a high purity graphite seed or bait or on a refractory, low-expansion glass, glass ceramic, or suitable crystalline ceramic seed. In this process, after completion of the deposition step, the substrate with deposited particulates thereon is inserted in a furnace to sinter the deposited particulates to form a clear glass body.

U.S. Patent 4,062,665 describes the production of glass powders by deposition from a burner flame onto an axially rotated substrate, which is pulled upward gradually. The porous soot rod thus generated is sintered to form a transparent glass rod that can be drawn to form an optical fiber.

Another sintering process is shown in U.S. Patent No. 4,262,638 which describes the use of an RF generated plasma inside a glass tube through which glass precursor vapors are passed to generate glass particulates which are deposited inside the tube in the form of either powder or glass. When depositing powders, according to this technique, the tube is moved back and forth between the RF source where powder deposition occurs and a heated zone where sintering occurs. The resultant hollow glass tube is finally collapsed to a solid glass rod and drawn into an optical fiber. The disclosure of U.S. Patent 4,276,072 describes a graphite cylinder which acts as a susceptor to heat glass vapor precursors for the deposition of transparent glass directly on the cylinder.

The previous methods for sintering a powder to form transparent glass bodies possess at least two disadvantages. The ultimately produced glass form is limited by substrate geometry and size. In addition, these techniques exhibit a low process efficiency.

None of the methods previously disclosed because of their dependence on substrate geometry are capable of producing glass spheres. In general, glass bodies having complicated physical structure cannot be fabricated by these prior techniques.

The prior art processes also exhibit poor deposition efficiencies. Large percentages of particulates formed during the deposition are lost in the exhaust and the particulate matter that is not deposited on the substrate needs to be removed from the deposition chamber. The previous deposition efficiencies typically vary between 30 percent and 50 percent depending upon the particular method. The characteristic low process efficiency associated with previous glass sintering processes make these processes less cost-effective due to the loss of precious deposition materials.

## SUMMARY OF THE INVENTION

In accordance with the teaching of the present invention pure or doped glass products of any shape are produced by creating glass powders from precursors in a torch, molding the powders and sintering them to the final product shape. The invention has the advantage of producing glass bodies of any form at a very high rate of deposition and very high process efficiency. The powders are produced in a torch and collected, according to the present disclosure, in a deposition chamber and transferred from there to a mold having the desired final shape. Two step sintering of the molded powders produces a clear glass of desired shape.

More specifically, glass powders are produced by first introducing oxide precursors of glass-forming materials in the form of a vapor or atomized solution into a torch such as an oxyhydrogen, oxyhydrocarbon, or plasma torch where they are reacted to produce glass powders. The powders are then collected on a plate and in an exhaust line filter. The collected powders are transferred to a mold of the final desired form consideration being given to the degree of shrinkage in subsequent sintering steps. The mold is next heated at a first temperature to sinter the powders into an opaque rigid glass body. The rigid body is removed from the mold and sintered further at a higher temperature to produce an optically transparent glass product. This product may then be utilized as a starting material for a further glass processing or drawing operation.

When heating the mold to produce an opaque rigid body, inert gases such as helium, or a mixture of helium and chlorine, or other purging and drying agents may be added in the environment of the body to prevent contamination and maintain the purity of the final product, and to insure drying of the powders.

## DESCRIPTION OF THE DRAWINGS

The invention will be more fully understood from the following detailed description taken in conjunction with the accompanying drawings in which:

Fig. 1 is a generalized schematic view of an apparatus for powder collection in accordance with the present invention;

Fig. 2 is a flow chart illustrative of the steps of glass body formation in accordance with the present invention;

Fig. 3 is a generalized schematic of a furnace for sintering the powder compact; and

Figs. 4-6 are illustrations of three typical molds used in practicing the present invention.

## DETAILED DESCRIPTION OF THE INVENTION

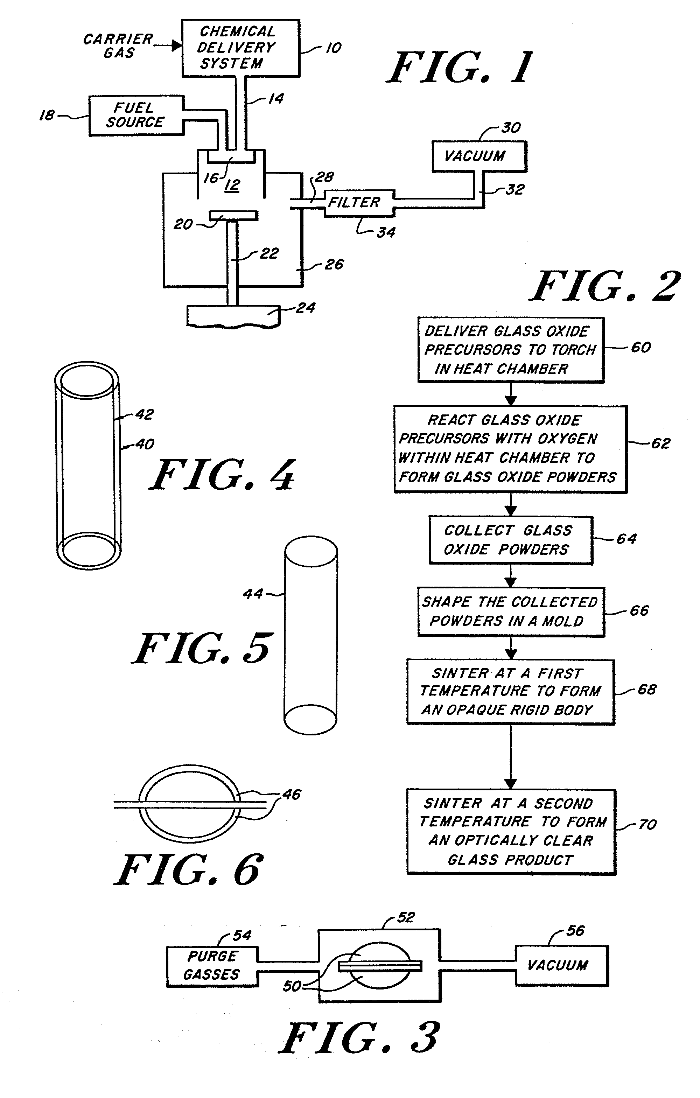

Apparatus and method for glass powder generation and collection, and for production of high purity glass bodies of general shape from the powder are shown in Figs. 1-3. A chemical delivery system 10 in Fig. 1 is used to convey glass oxide precursors to a heat chamber 12 as represented by a step 60 in Fig. 2. The chemical delivery system 10 may be a bubbler in which glass forming chemicals are contained and mixed with a carrier gas or gases for transport to the heat chamber 12. Alternatively, the chemical delivery system 10 may be a nebulizer in which glass oxide precursors are contained and conveyed therefrom to the heat chamber 12 in the form of non-volatile liquids or solutions. The glass forming chemicals or oxide precursors are fed from the chemical delivery system 10 to a heat source 16 within the heat chamber 12 through a delivery line 14.

The heat source 16 is typically an oxyhydrogen, oxyhydrocarbon or plasma torch. Torch fuels are fed to the torch 16 from a fuel source 18 and after torch ignition, oxide precursors are supplied to the torch 16 from the chemical delivery system 10. An oxyhydrogen or an oxyhydrocarbon torch is formed by supplying and igniting torch fuels of $H_2 + O_2$ or $C_nH_x + O_2$ respectively to the torch 16 from source 18. An argon plasma is formed by supplying argon to the torch 16 and ionizing the argon with inductively coupled energy from an RF source. Oxygen is

delivered to the argon plasma torch 16 after torch ignition. The glass forming chemicals or oxide precursors conveyed to the torch 16 from the chemical delivery system 10 through the delivery line 14 are halides that form glasses such as silicon dioxide, germanium dioxide, boron oxide, antimony oxide, phosphorous oxide, or other glass network formers or intermediates like titanium and lead oxide or other modifiers such as tin or indium or their mixtures. In a step 62 illustrated in Fig. 2 the glass oxide precursors react within the heating zone produced by the torch 16 resulting in the conversion of the delivered precursors to a very fine glass powder at a conversion efficiency of approximately 100%. Dopants may be introduced into the powder by supplying dopants to the torch 16 during conversion of the oxide precursors to the glass powder. The glass powders may be a pure oxide or an oxide doped during the formation with a dopant to produce glass doping with one or more elements including germanium, phosphorous, boron, titanium, aluminum, tin, zirconium, antimony, bismuth, tungsten, molybdenum, niobium, and tantalum.

The solid oxide powders thus formed within the heat chamber 12 are collected within a deposition chamber 26, in accordance with a step 64, in two ways. Approximately one-half of the total oxide particulate powder accumulates on a collecting plate 20 having a surface of an inert material such as quartz. The collecting plate 20 is mounted to a movable pedestal 22 and is vertically adjustable in combination with pedestal 22 via a height adjusting means 24 to maintain a distance between the torch 16 and the particulate oxide powder deposited on the collecting plate 20 to avoid undesired heating of the collected powder. The remaining portion of the oxide powders formed by introduction of the glass oxide precursors into the torch 16 are withdrawn from deposition chamber 26 through an exhaust tube 28 which is connected to a vacuum source 30 via a vacuum line 32. A filter 34 is disposed between the exhaust tube 28 and the vacuum line 32 for collection of the particulate powder drawn into the exhaust tube 28 by application of vacuum from source 30. The filter 34 is typically a microfiber filter for collecting glass oxide powders of approximately .1 micron diameter.

Powders are collected from plate 20 and filter 34, as shown in step 64, and highly pure glass bodies of desired shape are formed by shaping these powders in accordance with a step 66. For this purpose, the glass oxide powders removed from the collecting plate 20 and filter 34 are applied or packed into a mold of the desired shape. Exemplary molds are shown in Figs. 4-6. The mold comprises a material chemically inert to the collected powder and is typically a material such as graphite, sintered alumina, stabilized zirconia, or a similar refractory and inert material. Powders are compacted within the mold with or without pressure or alternatively the powders are rigidized within the mold by combining the powder with a binder such as polymethyl methacylate or a binder having similar binding properties.

Fig. 4 shows a mold in which a body of cylindrical shape is formed between an outer tube 40 and an inner rod 42. Fig. 5 illustrates a mold in the form of a tube for producing a solid rod upon pressurized injection or loading of particulate powder into the tube. The ends of the molds shown in Figs. 4 and 5 may be plugged to retain the powder within them. Fig. 6 is illustrative of a mold comprising opposing mold forms 46 for forming spherical, substantially spherical or other solid bodies. When using a binder to rigidize the glass powder within a mold, organic materials within the binder are decomposed by heating the loaded mold at a suitable temperature before further processing.

Referring to Fig. 3, a powder filled mold 50, inserted into a furnace 52 or suitable heat chamber, is heated in an environment purged by the flow of inert gas 54 such as helium from a source of purge gas 54. With powders generated by an oxyhydrogen or oxyhydrocarbon torch the furnace 52 is purged with a mixture of an inert gas such as helium and a drying gas such as chlorine.

The temperature of the furnace 52 is controlled to produce a first sintering step 68 at a suitable temperature that sinters and rigidizes the powder compact into an opaque, unitary body. During heating at this sintering temperature the body undergoes some shrinkage. The amount of shrinkage is primarily dependent on the pressure exerted upon the glass powder within the mold during the process of powder compaction. Since the mold has a relatively low coefficient of thermal expansion, shrinkage of the compact within the mold results in separation of the compact from the mold walls allowing its removal. The resulting compact produced at the first sintering temperature is a rigidized, opaque, partially sintered, porous body.

The rigidized body produced by sintering at this first sintering temperature is subjected to heating in a second sintering step 70 at a second sintering temperature above the first sintering temperature and typically at several hundred degrees below the melting point of the body. During this second sintering step 70 the furnace 52 is purged with an inert gas such as helium to avoid contamination of the body by reactive gases during sintering. Sintering at the second temperature in the second sintering step 70 transforms the body from an opaque, porous body to a pore-free, optically clear glass.

Glass bodies which are heavy or large are suspended within the furnace for this second sintering step to avoid undesirable deformation or warpage.

The methods and apparatus for glass powder and glass body formation herein disclosed produce highly pure glass bodies for any general shape in a cost-effective manner. The present process efficiently utilizes glass forming materials and oxides and only small percentages of the precious chemicals and glass forming materials and oxides used in this process are lost as waste products.

Examples illustrative of the apparatus and process for glass formation are provided below.

Example 1

Referring to Fig. 1, silicon tetrachloride is generated in a bubbler corresponding to the chemical delivery system 10. Oxygen, as a carrier gas, transports the silicon tetrachloride from the bubbler to the heating zone of the heat chamber 12 through the delivery line 14 and finally through the torch 16. The flow rate of the oxygen carrier gas through the bubbler is approximately 2,000 ml/minute. The heating zone is formed by a torch 16 which is an oxyhydrogen torch. The oxyhydrogen torch is fueled by supplying hydrogen to it at a flow rate of 8.1 liters/minute along with oxygen at 4.05 liters/minute. A chemical reaction occurs in which the silicon tetrachloride introduced to the zone via the oxygen carrier gas reacts to form a very fine silica powder having a particle diameter of approximately .1 micron. The silica powder is partially deposited on the collecting plate 20 having a quartz surface and the remaining silica powder is exhausted through exhaust tube 38 and captured within microfiber filter 34. The collecting plate 20, mounted to pedestal 22, engaged by height adjusting means 24, is controlled via height adjusting means 24 to maintain a fixed distance between the heating zone generated by the torch 16 and the quartz surface of the collecting plate 20. Silica powder is removed from the collecting plate 20 and the microfiber filter 34 and transferred to a graphite mold. The entire mold assembly with compacted powder contained therein is heated to 1,150°C in furnace 52 which is purged with helium gas at a flow rate of 5 ml/minute and chlorine gas at a flow rate of 50 ml/minute. The purge gas prevents reaction of the glass forming oxides with other gaseous contaminants and thus avoids the introduction of impurities into the compacted body. It also dries the silica powder. The compact is heated at 1,150°C for a period greater than five minutes and preferably for a period of thirty minutes. Sintering occurs at the 1,150°C temperature, causing shrinkage and separation of the opaque glass body from the mold. The powder compact thus formed is a rigid silica body. This body is separated from the mold and sintered at a second temperature above 1,400°C, preferably at approximately 1,500°C, in an inert gas atmosphere of helium supplied to the furnace 52 at a flow rate of 5 ml/minute. The body is sintered at this second sintering temperature for a period greater than thirty minutes and preferably for ninety minutes. The article produced in accordance with this example is a non-porous, bubble-free, optically clear silica glass body of high purity.

Example 2

The procedure of Example 1 is modified such that the torch 16 is an oxyhydrocarbon torch rather than an oxyhydrogen torch. The oxyhydrocarbon torch is fueled by supplying natural gas to the torch at a flow rate of 8.1 liters/minute along with oxygen at a flow rate of 12.1 liters/minute.

Example 3

The procedure of Example 1 is modified such that the torch 16 is a plasma torch fueled by flowing argon gas at approximately 700 ml/minute through an inductively coupled plasma at an RF power level of one kilowatt or above and a frequency of 10 megahertz or above. Oxygen is then introduced at a flow rate of 700 ml/minute. Powders produced in the heating zone of the plasma torch are heated within a furnace at the first sintering temperature in an atmosphere purged by helium gas alone. Helium gas is introduced to the furnace at a flow rate of 5 ml/minute.

Example 4

The procedure of Example 1 is modified such that silicon tetrachloride and germanium tetrachloride are introduced to the heat chamber 12 at flow rates of 2,000 ml/minute and 1,000 ml/minute respectively through a bubbler corresponding to the chemical delivery system 10. The resulting glass body is a germania doped silica glass.

The above Examples and discussion are solely illustrative of methods and apparatus for practicing the disclosed invention, the scope of the invention being limited only by the following claims.

- 1 -

## CLAIMS

1. A method for producing a highly pure glass article comprising the steps of:

reacting a glass forming material in a torch selected from the group of oxyhydrogen, oxyhydrocarbon and plasma torches to produce glass oxide powders having a known melting point;

shaping said powders into a form;

heating the shaped powders at a first temperature below the melting point of said powders to form a rigid opaque body;

sintering the rigid opaque body at a second temperature between said first temperature and the melting point of said powders to produce a highly pure, optically clear glass article.

2. The method according to claim 1, further including the step of delivering the glass forming material in the form of a vapor in a carrier gas.

3. The method according to claim 2, wherein the carrier gas is oxygen.

4. The method according to claim 1, further including the step of delivering the glass forming material in the form of an atomized solution.

5. The method according to claim 1, further including the step of collecting said glass powder on a collecting plate.

6. The method according to claim 1, further comprising the step of collecting said glass powder in a filter.

7. The method according to claim 1, wherein said glass powder is approximately .1 micron in diameter.

8. The method according to claim 1, wherein said glass forming material is a precursor of a glass oxide selected from the group consisting of silicon dioxide, germanium dioxide, boron oxide, antimony oxide, and phosphorous oxide.

9. The method according to claim 1, wherein said shaping step includes the step of applying pressure to said powders within a mold to achieve compaction thereof.

10. The method according to claim 1, wherein said shaping step includes the step of applying said powders to a mold in the absence of pressure.

11. The method according to claim 1 wherein said shaping step includes the step of adding a binder to the powder to achieve rigidizing of the powder within the mold without application of pressure.

12. The method according to claim 1, wherein said step of heating at a first temperature includes the step of supplying an inert atmosphere to the environment of said powders.

13. The method according to claim 1, wherein said step of heating at said first temperature includes the step of supplying a mixture of an inert gas and a drying gas to the environment of said powders.

14.    An ultra pure, optically clear glass body produced by the method comprising the steps of:

reacting a glass forming material in a torch selected from the group consisting of oxyhydrogen, oxyhydrocarbon and plasma torches to produce glass oxide powders having a known melting point;

shaping said powders into a form;

heating the shaped powders at a first temperature below the melting point of said powders to form a rigid opaque body;

sintering the rigid opaque body at a second temperature between said first temperature and the melting point of said powders to produce a highly pure, optically clear glass article.

15.    The glass body produced by the method of claim 14, wherein said glass forming material is a precursor for a glass oxide precursor selected from the group consisting of silicon dioxide, germanium dioxide, boron oxide, antimony oxide, and phosphorous oxide.

16.    The glass body produced by the method of claim 14, further including the step of doping said glass powder with one or more elements selected from the group of germanium, phosphorous, boron, titanium, aluminum, tin, zirconium, antimony, bismuth, tungsten, molybdenum, niobium and tantalum.

17.    A method for forming highly pure glass powders comprising the steps of:

delivering a glass forming material to a torch selected from the group consisting of oxyhydrogen, oxyhydrocarbon and plasma torches;

reacting said oxides in the torch to produce glass powder; and

collecting glass powder formed by reaction of said glass forming material within said torch.

18.     The method of claim 17, wherein the delivering step includes the step of supplying the glass forming material to said torch in the form of a vapor in a carrier gas.

19.     The method of claim 18, wherein the carrier gas is oxygen.

20.     The method of claim 17, wherein the delivering step includes the step of supplying the glass forming material in the form of an atomized solution.

21.     The method of claim 17, wherein the collecting step includes the step of collecting the glass powder on a collecting plate.

22.     The method of claim 21, wherein the reacting step occurs in a reaction zone; and

        the collecting step includes the steps of adjusting the collecting plate position to maintain a predetermined spacing between the reaction zone and said plate.

23.     The method of claim 17, wherein the collecting step includes the step of collecting the glass powder in a filter.

24.     The method of claim 17, wherein said glass powder is approximately .1 micron in diameter.

25.     The method of claim 17, wherein said glass forming material is a precursor of a glass oxide selected from the group consisting of silicon dioxide, germanium dioxide, boron oxide, antimony oxide, and phosphorous oxide.

26. Apparatus for producing a highly pure glass article comprising:

means for reacting a glass forming material within a heat chamber in a torch selected from the group consisting of oxyhydrogen, oxyhydrocarbon and plasma torches to produce glass oxide powders having a known melting point;

means for shaping said powders into a form;

means for heating the shaped powders at a first temperature below the melting point of said powders to form a rigid opaque body;

means for sintering the rigid opaque body at a second temperature between said first temperature and the melting point of said powders to produce a highly pure, optically clear glass article.

27. The apparatus of claim 26 further including means for delivering said glass forming material to said torch.

28. The apparatus of claim 27, wherein said delivering means comprises a bubbler and means for transporting said glass forming materials to said torch in a carrier gas.

29. The apparatus of claim 28, wherein said carrier gas is oxygen.

30. The apparatus of claim 27, wherein said delivering means comprises a nebulizer and means for transporting said glass forming materials to said torch.

31. The apparatus of claim 26 further including means for collecting the oxide powder.

32. The apparatus of claim 26, wherein said collecting means comprises a collecting plate located below said heat chamber.

- 6 -

0127956

33. The apparatus of claim 31, wherein said collecting means comprises:

a filter; and

means for creating a vacuum to draw said glass powder into said filter.

34. The apparatus of claim 31, wherein said collecting means comprises:

a collecting plate located below said reacting means to receive a portion of said powder;

a filter; and

means for creating vacuum to draw glass powder not collected on said plate into said filter.

35. The apparatus of claim 34, wherein said filter is a microfiber filter.

36. The apparatus of claim 26, wherein said glass forming material is a precursor of a glass oxide selected from the group consisting of silicon dioxide, germanium dioxide, boron oxide, antimony oxide, and phosphorous oxide.

37. The apparatus of claim 26, wherein said glass powder is approximately .1 micron in diameter.

FIG. 1

CARRIER GAS → CHEMICAL DELIVERY SYSTEM — 10

FUEL SOURCE — 18

14

16 12

20

22

24

26

28 FILTER 34

32

VACUUM — 30

FIG. 4

42
40

FIG. 5

44

FIG. 6

46

FIG. 2

DELIVER GLASS OXIDE PRECURSORS TO TORCH IN HEAT CHAMBER — 60

REACT GLASS OXIDE PRECURSORS WITH OXYGEN WITHIN HEAT CHAMBER TO FORM GLASS OXIDE POWDERS — 62

COLLECT GLASS OXIDE POWDERS — 64

SHAPE THE COLLECTED POWDERS IN A MOLD — 66

SINTER AT A FIRST TEMPERATURE TO FORM AN OPAQUE RIGID BODY — 68

SINTER AT A SECOND TEMPERATURE TO FORM AN OPTICALLY CLEAR GLASS PRODUCT — 70

PURGE GASSES — 54

52

50

VACUUM — 56

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-3 037 491 (NIPPON TELEGRAPH & TELEPHONE PUBLIC CORP et al.) * Claims 1, 8 * & US-A-4 402 720 (Cat. P, A) | 1,14, 17 | C 03 B 37/025<br>C 03 B 19/00<br>C 03 B 19/06<br>C 03 B 19/10 |
| A | US-A-4 230 744 (M.G. BLANKENSHIP) * Claims 1-4 * | 1,4,14 ,17,26 | |
| A | US-A-4 191 545 (J.B. MacCHESNEY et al.) * Claim 1 * | 1 | |
| D,A | US-A-4 062 665 (T. IZAWA et al.) * Claims 1, 11, 13, 14 * | 1,12, 14,17 | |
| A | US-A-3 275 408 (J.A. WINTERBURN) * Claims 1, 4; figure * | 1,14, 17,21, 26 | TECHNICAL FIELDS SEARCHED (Int. Cl. ³)<br><br>C 03 B 19/00<br>C 03 B 19/06<br>C 03 B 19/09<br>C 03 B 19/10<br>C 03 B 37/025 |
| A | GB-A-2 067 180 (NIPPON TELEGRAPH & TELEPHONE PUBLIC CORP et al.) * Claim 1 * | 1 | |

--- -/-

The present search report has been drawn up for all claims

| Place of search | Date of completion of the search | Examiner |
|---|---|---|
| BERLIN | 14-08-1984 | STROUD J.G. |

| | DOCUMENTS CONSIDERED TO BE RELEVANT | | Page 2 |
|---|---|---|---|

| Category | Citation of document with indication. where appropriate, of relevant passages | Relevant to claim | CLASSIFICATION OF THE APPLICATION (Int. Cl ³) |
|---|---|---|---|
| A | GB-A-1 559 768 (INTERNATIONAL STANDARD ELECTRIC CORP.) * Claims 1, 4-12, 16, 33 * & US-A-4 276 072 (Cat. D, A) | 1,14-17,26 | |
| | ----- | | |
| | | | TECHNICAL FIELDS SEARCHED (Int. Cl ³) |

The present search report has been drawn up for all claims

| Place of search | Date of completion of the search | Examiner |
|---|---|---|
| BERLIN | 14-08-1984 | STROUD J.G. |